# EUROPÄISCHE PATENTSCHRIFT

(11) **EP 3 261 906 B1**
(45) Veröffentlichungstag und Bekanntmachung des Hinweises auf die Patenterteilung: **01.05.2019**
(21) Anmeldenummer: 16709269.1
(22) Anmeldetag: 19.02.2016
(51) Int. Cl.: B60K 11/08, B60R 13/08, B62D 35/02, B60K 11/06

(54) **UNTERBODENVERKLEIDUNG FÜR EINEN KRAFTWAGEN, INSBESONDERE PERSONENKRAFTWAGEN**
UNDERBODY CLADDING FOR A MOTOR VEHICLE, IN PARTICULAR A PASSENGER CAR
HABILLAGE DE DESSOUS DE CAISSE POUR UN VÉHICULE À MOTEUR, NOTAMMENT POUR UNE VOITURE PARTICULIÈRE

(30) Priorität: 26.02.2015 DE 102015002431
(43) Veröffentlichungstag der Anmeldung: 03.01.2018
(73) Patentinhaber: Daimler AG, 70327 Stuttgart (DE)
(72) Erfinder: HAEGELE, Klaus, 73572 Heuchlingen (DE); GOLOMBIOVSKY, Gerd Ralf, 71576 Burgstetten (DE); BUESING, Stephan, 70771 Leinfelden-Echter (DE); SCHMID, Oliver, 74376 Gemmrigheim (DE); BRENDLE, Thomas, 71263 Weil der Stadt (DE)
(74) Vertreter: JENSEN & SON
(86) Internationale Anmeldenummer: PCT/EP2016/000287
(87) Internationale Veröffentlichungsnummer: WO 2016/134833

(56) Entgegenhaltungen:
- DE-A1- 19 904 515
- DE-A1-102008 058 993

## Beschreibung

Die Erfindung betrifft eine Unterbodenverkleidung für einen Kraftwagen, insbesondere einen Personenkraftwagen, gemäß Oberbegriff des Anspruchs 1.

Aus der DE 10 2012 009 824 A1 geht eine Unterbodenverkleidung hervor, die wenigstens ein unterhalb eines Bereichs des Kraftwagens anordenbares Unterbodenverkleidungsteil umfasst, welches wenigstens eine Öffnung für Luft aus diesem Bereich aufweist. Dies bedeutet, dass die als Durchgangsöffnung ausgebildete Öffnung von aus dem Bereich stammender Luft durchströmbar ist. Die Unterbodenverkleidung umfasst ferner ein flächiges, eine Mehrzahl von lamellenförmigen Stegen aufweisendes Verschlusselement, welches zwischen einer die Öffnung verschließenden Sperrstellung und einer die Öffnung freigebenden Offenstellung relativ zu dem Unterbodenverkleidungsteil linear verschiebbar ist. In der Sperrstellung kann die Luft aus dem Bereich die Öffnung nicht durchströmen, da diese durch das Verschlusselement fluidisch versperrt ist. In der Offenstellung jedoch gibt das Verschlusselement die Öffnung frei, so dass die Luft aus dem Bereich an die Umgebung ausströmen kann.

Aus der DE 10 2009 054 091 A1 geht ein Verkleidungsbauteil für den Unterboden eines Kraftfahrzeugs hervor, das eine Verbrennungskraftmaschine und eine Abgasanlage aufweist. Das Unterbodenverkleidungsteil ist im Bereich unterhalb einer Komponente der Abgasanlage angeordnet und weist wenigstens eine Einlassöffnung für einen Luftstrom auf, der sich bei Fahrt des Kraftfahrzeugs am Unterboden einstellt. Dabei ist die Einlassöffnung mittels einer in der Einlassöffnung schwenkbar gelagerten Klappe verschließbar.

Aus der DE 10 2008 058 993 A1 geht eine gattungsgemäße Unterbodenverkleidung hervor.

Den bekannten Unterbodenverkleidungen ist gemeinsam, dass die Verstellbarkeit ihrer Verschlusselemente bei Schlechtwegefahrten, also beispielsweise Fahrten auf einem Feldweg mit oder ohne Mittelbewuchs, infolge des Eintrags von kleinteiligen Partikeln, insbesondere Sand, Erde, Steine und auch Gräser oder dergleichen, über die Öffnung in den mittels der Unterbodenverkleidung nach unten hin abzudeckenden Bereich häufig nachhaltig beeinträchtigt wird bis hin zum dauerhaften Funktionsausfall.

Aufgabe der vorliegenden Erfindung ist es daher, eine Unterbodenverkleidung der eingangs genannten Art zu schaffen, welche funktionssicher einsetzbar ist und diesen Nachteil nicht aufweist.

Diese Aufgabe wird erfindungsgemäß durch eine Unterbodenverkleidung mit den Merkmalen des Anspruchs 1 gelöst. Vorteilhafte Ausgestaltungen mit zweckmäßigen Weiterbildungen der Erfindung sind in den übrigen Ansprüchen angegeben.

Hintergrund der Erfindung ist, dass es üblicherweise wünschenswert ist, eine ein Unterbodenverkleidungsteil umfassende Unterbodenverkleidung der hier angesprochenen Art auf dessen im montierten Zustand in Fahrzeughochrichtung nach unten weisenden Unterseite möglichst glatt und insbesondere ohne Lufteinlass- oder -auslassöffnungen auszugestalten, so dass sich eine besonders vorteilhafte Aerodynamik, insbesondere ein besonders geringer cw-Wert, des Kraftwagens realisieren lässt. Im montierten Zustand ist das Unterbodenverkleidungsteil beispielsweise unterhalb einer Komponente einer Abgasanlage und/oder unterhalb eines Antriebsaggregats, beispielsweise einer Verbrennungskraftmaschine des Kraftwagens und/oder einer Batterieanordnung oder Elektromotors eines elektrifizierten Kraftwagens angeordnet, so dass beispielsweise ein Motorraum, in welchem die Verbrennungskraftmaschine angeordnet ist, in Fahrzeughochrichtung nach unten zumindest teilweise durch das Unterbodenverkleidungsteil abgedeckt beziehungsweise verschlossen ist.

Zur Regulierung beziehungsweise Reduzierung der in dem mittels der Unterbodenverkleidung abgedeckten Bereichs infolge des Betriebs der Verbrennungskraftmaschine oder sonstiger Aggregate, Maschinen, Speicher oder dergleichen herrschenden hohen Temperaturen ist im Unterbodenverkleidungsteil wenigstens eine Öffnung für Luft vorgesehen, über welche die heiße Luft aus dem mittels der Unterbodenverkleidung abgedeckten Bereich an die Umgebung entweichen kann, um dadurch Temperaturgrenzwerte der Abgasanlage beziehungsweise der Verbrennungskraftmaschine einhalten zu können. Die Öffnung dient also als Abluftbeziehungsweise Luftauslassöffnung. Eine solche, beispielsweise dauerhaft geöffnete Auslassöffnung beeinträchtigt jedoch die Aerodynamik beziehungsweise den cw-Wert des Kraftwagens. Ferner kann eine solche Auslassöffnung zu Verwirbelungen im Luftstrom im Bereich des Unterbodens führen, woraus unangenehme Geräusche resultieren können.

Um nun Luft aus dem Bereich des Kraftwagens, insbesondere aus dem Motorraum, bedarfsgerecht abführen zu können bei gleichzeitiger Realisierung einer vorteilhaften Aerodynamik und eines vorteilhaften Geräuschverhaltens des Kraftwagens, ist das Verschlusselement um eine Schwenkachse zwischen der Sperrstellung und der Offenstellung verschwenkbar. Bei unkritischen Temperaturen kann das Verschlusselement in der Sperrstellung verbleiben, wodurch übermäßige Luftverwirbelungen im Unterbodenbereich des Kraftwagens vermieden werden können. In der Folge können unangenehme Fahrgeräusche vermieden werden. Ferner ist eine besonders vorteilhafte Aerodynamik, insbesondere ein geringer cw-Wert, darstellbar. Überschreitet jedoch beispielsweise eine im Bereich des Kraftwagens herrschende Temperatur einen vorgebbaren Schwellenwert, so kann das Verschlusselement in die Offenstellung geschwenkt werden, so dass zumindest ein Teilbereich der als Abluftbeziehungsweise Luftauslassöffnung wirkenden Öffnung freigegeben wird, damit die heiße Luft aus dem Bereich durch den freigebenden Teilbereich der Öffnung an die Umgebung des Kraftwagens ausströmen kann.

Die Unterbodenverkleidung nach Anspruch 1 umfasst wenigstens ein unterhalb eines Bereichs des Kraftwagens anordenbares Unterbodenverkleidungsteil, welches wenigstens eine Öffnung aufweist, und wenigstens ein Verschlusselement, welches um eine Schwenkachse zwischen einer zumindest einen Teilbereich der Öffnung verschließenden Sperrstellung und wenigstens einer den Teilbereich freigebenden Offenstellung relativ zu dem Unterbodenverkleidungsteil verschwenkbar ist. Die Unterbodenverkleidung zeichnet sich dadurch aus, dass das Verschlusselement mittels einer Halteeinrichtung so am Unterbodenverkleidungsteil gehalten ist, dass die Schwenkachse des Verschlusselements in Fahrzeughochrichtung oberhalb der Öffnung und in einem Abstand zu dieser positioniert ist, dass die Halteeinrichtung mindestens einen Haltearm aufweist, an welchen das Verschlusselement verschwenkbar gehalten ist, und dass der mindestens eine Haltearm federelastisch ausgebildet ist und/oder zumindest einen federelastisch verformbaren Abschnitt aufweist. Aufgrund der gegenüber der Öffnung beziehungsweise dem Rand der Öffnung gegenüber der Fahrbahn nach oben versetzten Anordnung der Schwenkachse und somit auch des hierfür vorgesehenen Schwenkmechanismus, umfassend zumindest ein Schwenklager, befindet sich dieses in einer geschützten beziehungsweise zumindest gegenüber bekannten Unterbodenverkleidungsteilen besser geschützten Position innerhalb des mittels der Unterbodenverkleidung abgedeckten Raums, so dass ein möglicher Fremdkörpereintrag nicht zu einer Beeinträchtigung der Schwenkbarkeit des Verschlusselements führt. Die eingetragenen Fremdkörper tauchen quasi unter dem Schwenklager des Verschlusselements durch und können so ohne sich im Schwenklager festzusetzen oder sich am Verschlusselement zu verfangen wieder aus dem Kraftwagen ausgeleitet werden. Daher bleibt die Bewegbarkeit und somit die Funktion des Verschlusselements auch bei Verschmutzung der Unterbodenverkleidung und Schlechtwegefahren mit geöffnetem Verschlusselement gewährleistet.

Mittels entsprechender Formgebung des Haltearms ist eine örtliche Trennung zwischen der Befestigung des Verschlusselements am Kraftwagen, vorzugsweise am Unterbodenverkleidungsteil, und die Anordnung beziehungsweise Positionierung der Schwenkachse des Verschlusselements relativ gegenüber der Öffnung und in einem Abstand zu dieser möglich.

Dadurch, dass der mindestens eine Haltearm federelastisch ausgebildet ist oder zumindest einen federelastisch verformbaren Abschnitt aufweist, sind auch größere Auslenkungen beziehungsweise Ausweichbewegungen des Verschlusselements bei Kontakt desselben mit dem Untergrund oder fahrbahnseitig aufliegenden Festkörpern möglich, um das Verschlusselement und die zum Verschwenken desselben vorgesehenen Stellmittel vor Beschädigungen zu schützen. Nach erfolgter Ausweichbewegung des mindestens einen Haltearms federt dieser wieder in seine Ausgangslage zurück und positioniert so das Verschlusselement wieder in gewünschter Weise gegenüber der in der Unterbodenverkleidung vorgesehenen Öffnung.

Im Zusammenhang mit der hier vorliegenden Erfindung wird unter dem Begriff "verschwenken" im Zusammenhang mit der Verstellung des Verschlusselements sowohl verstanden, dass das Verschlusselement -wie bei einer ersten Ausführungsvariante vorgesehen- zwischen der Sperr- und der Offenstellung, welche beide vorzugsweise Endstellungen sind, hin und her schwenkbar ist, also auch -wie bei einer zweiten Ausführungsvariante vorgesehen- eine rotatorische Bewegung ausführen kann, so dass das Verschlusselement hier beim Verschwenken aus der Offen- in die Sperrstellung und zurück in die Offenstellung und/oder von der Sperr- in die Offenstellung und zurück in die Sperrstellung eine vollständige Kreisbahn durchläuft. Das Verschwenken des Verschlusselements erfolgt bei der zweiten Ausführungsvariante also immer in die gleiche Richtung, das Verschlusselement wird also quasi durchgedreht.

Nach einer Weiterbildung der Erfindung ist vorgesehen, dass der mindestens eine Haltearm an einem seiner beiden Endbereiche am Unterbodenverkleidungsteil befestigt ist und an seinem anderen, mindestens ein Schwenklager für das Verschlusselement aufweisenden beziehungsweise ausbildenden Endbereich frei über die Öffnung hin auskragt. Die Anbringung des Haltearms am Unterbodenverkleidungsteil ermöglicht eine Vormontage des Verschlusselements am Unterbodenverkleidungsteil. Die einseitige Festlegung des Haltearms ermöglicht eine gewisse Nachgiebigkeit des Haltearms bei einer Kraftbeaufschlagung des Verschlusselements infolge beispielsweise eines Anpralls bei einer Schlechtwegefahrt, so dass diese äußeren Kräfte nicht vollständig vom Verschlusselement und/oder vom Schwenklager des Verschlusselements abgestützt oder aufgenommen werden müssen. Eine Beschädigung des Verschlusselements, dessen Verstellmechanismus sowie seiner Lagerung kann hierdurch vermieden werden.

Es hat sich als vorteilhaft herausgestellt, wenn das Verschlusselement mittels mehrerer Haltearme schwenkbar gelagert ist. Diese sind entlang der Schwenkachse in einem Abstand voneinander angeordnet. Die Haltearme sind vorzugsweise als Gleichteile ausgebildet.

Bei einem besonders vorteilhaften Ausführungsbeispiel der Unterbodenverkleidung weist das Verschlusselement wenigstens einen gekrümmten, vorzugsweise konvex geformten Wandabschnitt aufweist, der bei in Sperrstellung angeordnetem Verschlusselement die Öffnung abdeckt beziehungsweise fluidisch versperrt und dabei vorzugsweise in Richtung der Fahrbahn nach unten aus der Öffnung ausbaucht. Bei entsprechender Anordnung der Schwenkachse des Verschlusselements überragt also zumindest ein Teilbereich des konvex geformten Bereichs beziehungsweise Teilabschnitt des Verschlusselements die der Fahrbahn zugewandten Flachseite des Unterbodenverkleidungsteils, steht also nach unten hin über die Unterbodenverkleidung über. Dabei kann die Krümmung dieses Wandabschnitts sich auf die Überströmung des Unterbodenbereichs des Kraftwagens positiv auswirken, wodurch die Aerodynamik des Kraftwagens bei in Sperrstellung angeordnetem Verschlusselement weiter verbessert ist.

In bevorzugter Ausführungsform des Verschlusselements weist dieses einen schalenförmigen Grundkörper auf, welcher vorzugsweise zudem eine gewisse Längserstreckung aufweist, so dass sich insgesamt eine Rinnenform ergibt. Zur Stabilisierung des Grundkörpers kann dieser entweder endseitig und/oder in dem dazwischenliegenden Bereich mit zumindest einem Versteifungssteg, -wand, -rippe oder dergleichen versehen sein.

Nach einer Weiterbildung ist vorgesehen, dass der Abstand der Schwenkachse zu mindestens einem Abschnitt des Randes der Öffnung zumindest im Wesentlichen dem Krümmungsradius des konvex geformten Bereichs des Verschlusselements entspricht. Das Verschlusselement kann daher einen kreisabschnittsförmigen oder kreisringausschnittsförmigen Querschnitt aufweisen. Vorteilhaft hierbei ist, dass bei einer derartigen Form der Außenumfangsfläche des Verschlusselements und dem damit gebildeten rinnenförmigem Grundkörper desselben sowie einer Öffnung mit -in Draufsicht auf die Öffnung gesehen- zumindest im Wesentlichen rechteckförmiger Kontur ein zumindest im Wesentlicher gleichmäßiger Abdichtspalt zwischen Verschlusselement und Öffnungsrand realisierbar ist.

Weiterhin wird ein Ausführungsbeispiel der Unterbodenverkleidung bevorzugt, das sich dadurch auszeichnet, dass das auf der dem abzudeckenden Bereich des Kraftwagens zugewandten Seite des Unterbodenverkleidungsteil angeordnete Verschlusselement in Sperrstellung mit seiner im verbauten Zustand der Unterbodenverkleidung der Fahrbahn zugewandten Außenfläche zumindest teilweise in Anlagekontakt mit wenigstens einem Randbereich der Öffnung steht oder mittels eines auf die Innenfläche des Verschlusselements wirkenden Luftstroms bringbar ist. Der Luftstrom kann beispielsweise dadurch erzeugt werden, dass über mindestens eine in der Kraftwagenfront vorgesehene Lufteinlassöffnung, beispielsweise in einem Kühlergrill, Luft in den mittels der Unterbodenverkleidung abzudeckenden Bereich beziehungsweise Raum des Kraftwagens eingelassen wird. Durch das Anpressen des Verschlusselements an die Unterbodenverkleidung kann ein definierter Anlagekontakt zwischen diesen Bauteilen sichergestellt und damit ein klappern des Verschlusselements vermieden werden.

Bevorzugt wird auch ein Ausführungsbeispiel der Unterbodenverkleidung, bei dem die Längsmittelachse der Öffnung und die Schwenkachse des Verschlusselements in einer sich in Kraftwagenhochrichtung (z-Richtung) und Kraftwagenlängsrichtung (x-Richtung) aufspannenden Ebene angeordnet sind. Dabei kann diese Ebene gegenüber einer gedachten Horizontalen geneigt angeordnet sein, das heißt diese Ebene und die gedachte Horizontale schließen einen Winkel miteinander ein, der im Bereich zwischen > 0^und < 90° liegt. Vorzugsweise sind dabei die Längsmittelachse der Öffnung und die Schwenkachse des Verschlusselements parallel zueinander angeordnet.

Bevorzugt wird auch ein Ausführungsbeispiel der Unterbodenverkleidung, das sich dadurch auszeichnet, dass die Öffnung sich bis zu einem -in verbautem Zustand des Unterbodenverkleidungsteils und bei Vorwärtsfahrtrichtung des Kraftwagens betrachtethinteren Querrand des Unterbodenverkleidungsteils erstreckt. Damit wird sichergestellt, dass der Raum zwischen dem Unterbodenverkleidungsteil und darüberliegend angeordneten Bauteilen so gering ist, dass sich bei in Offenstellung angeordnetem Verschlusselement eingetragenen Fremdkörper, beispielsweise Steine, Sand, Dreck oder Gras, nicht sammeln können sondern wieder aus dem Kraftwagen -vorzugsweise selbstständig- ausgetragen werden.

Festzuhalten bleibt, dass die Öffnung in der erfindungsgemäßen Unterbodenverkleidung überall dort vorgesehen werden kann, wo der Schmutzeintrag nichts ausmacht oder ebenfalls wieder aus dem Kraftwagen entweichen, das heißt selbstständig oder mittels geeigneter Maßnahmen herausbefördert werden kann.

Nach einer Weiterbildung der Erfindung ist vorgesehen, dass die Öffnung den hinteren Querrand des Unterbodenverkleidungsteils unterbricht und zu diesem zumindest teilweise randoffen ausbildet ist. Diese Ausgestaltung begünstigt den Austrag der Fremdkörper aus der Öffnung. Aus Stabilisierungsgründen, insbesondere damit die Öffnung sich in Richtung des hinteren Querrands nicht aufspreizen kann, kann hier die Öffnung mittels eines vorzugsweise schmalen Überbrückungselements versehen sein.

Alternativ hierzu kann der hinteren Querrand in Fahrzeughochrichtung nach oben gezogen sein, das heißt der Querrand des Unterbodenverkleidungsteils ist oberhalb der Öffnung positioniert, so dass auch hier ein Ausprägen einer Sammeltasche für Schmutz verhindert ist und dieser bei einem Eintrag in den Kraftwagen auch wieder selbstständig entweichen/heraustransportiert werden kann.

Bei einem besonders vorteilhaften Ausführungsbeispiel der Unterbodenverkleidung ist im hinteren Querrandbereich des Unterbodenverkleidungsteils -mit Blickrichtung in Kraftwagenlängsrichtung- oberhalb der Öffnung ein zur Kraftwagenaußenseite hin offener Freiraum zwischen dem Unterbodenverkleidungsteil und dem darüber befindlichen Unterbodenbereich vorgesehen. Dadurch wird ein Ansammeln von über die Öffnung bei in Offenstellung angeordnetem Verschlusselement eingetragenen Fremdkörpern in dem mittels der Unterbodenverkleidung abzudeckenden Bereich sicher vermieden.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine schematische Unteransicht auf eine Unterbodenverkleidung für einen Kraftwagen, mit wenigstens einem Unterbodenverkleidungsteil und mit wenigstens einem Verschlusselement, welches zwischen einer Sperrstellung und wenigstens einer Offenstellung um eine Schwenkachse relativ zu dem Unterbodenverkleidungsteil verschwenkbar ist, wobei sich das Verschlusselement in der Sperrstellung befindet;
- Fig. 2: ausschnittsweise eine schematische und perspektivische Seitenansicht auf die Unterbodenverkleidung gemäß Fig. 1;
- Fig. 3: eine weitere schematische Unteransicht auf die Unterbodenverkleidung, wobei sich das Verschlusselement in der Offenstellung befindet;
- Fig. 4: ausschnittsweise eine schematische und perspektivische Seitenansicht auf die Unterbodenverkleidung gemäß Fig. 3;
- Fig. 5: in perspektivischer Darstellung einen Ausschnitt der Unterbodenverkleidung mit in Sperrstellung angeordnetem Verschlusselement und einem Ausführungsbeispiel einer Verstelleinrichtung zum Verschwenken des Verschlusselements;
- Fig. 6: das Ausführungsbeispiel gemäß Fig. 5 mit in Offenstellung angeordnetem Verschlusselement und
- Fig. 7: einen Querschnitt durch das in Sperrstellung angeordnete Verschlusselement gemäß dem Ausführungsbeispiel der Fig. 5 und 6.

In den Figuren sind gleiche oder funktionsgleiche Elemente mit gleichen Bezugszeichen versehen.

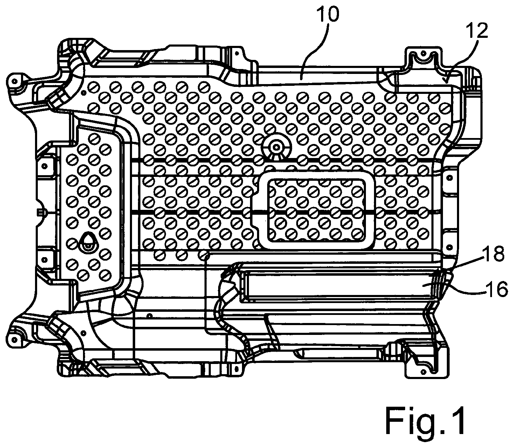

Fig. 1 zeigt in einer schematischen Unteransicht eine Unterbodenverkleidung für einen Kraftwagen, insbesondere einen Personenkraftwagen. Die Unterbodenverkleidung umfasst wenigstens ein im Wesentlichen flächig ausgebildetes Unterbodenverkleidungsteil 10, welches unterhalb eines Bereichs des Kraftwagens anordenbar ist. Dieser Bereich des Kraftwagens umfasst zumindest einen Teil eines Motorraums, in welchem ein eine Verbrennungskraftmaschine umfassendes Antriebsaggregat des Kraftwagens mit daran angeschlossener Abgasanlage angeordnet ist. Mit anderen Worten ist das Unterbodenverkleidungsteil 10 im vollständig hergestellten Zustand des Kraftwagens in Fahrzeughochrichtung (z-Richtung) unterhalb des Motorraums angeordnet, so dass der Motorraum zumindest teilweise und vorzugsweise zumindest überwiegend oder vollständig in Fahrzeughochrichtung nach unten hin durch das Unterbodenverkleidungsteil 10 überdeckt und somit verschlossen ist. Hierdurch ist eine Geräusch- und auch Wärmekapselung des zumindest das Antriebsaggregat aufweisenden Motorraums realisiert. Festzuhalten bleibt, dass die erfindungsgemäße Unterbodenverkleidung auch bei Fahrzeugen mit alternativen Antrieben, beispielsweise Elektromotor, Brennstoffzelle oder dergleichen, welche auch Abwärme erzeugende Aggregate oder Energiespeicher, beispielsweise Batterien, aufweisen, ohne weiteres einsetzbar ist.

Vorzugsweise ist das Unterbodenverkleidungsteil 10 aus einem Kunststoff gebildet. In Fig. 1 ist eine Unterseite 12 des Unterbodenverkleidungsteils 10 erkennbar, welche im montierten Zustand in Fahrzeughochrichtung (z-Richtung) nach unten weist und somit dem Motorraum abgewandt und der Fahrbahn zugewandt ist. Zur Realisierung einer vorteilhaften Aerodynamik und insbesondere eines geringen c_{w}-Werts des Kraftwagens ist das Unterbodenverkleidungsteil 10 auf seiner Unterseite 12 zumindest überwiegend glatt und soweit wie möglich im Wesentlichen strömungsgünstig ausgebildet, so dass im Fahrbetrieb des Kraftwagens die Luftströmung in dessen Unterbodenbereich zu einem möglichst kleinen Strömungswiderstand und somit zu einer verbesserten Aerodynamik des Kraftwagens beiträgt.

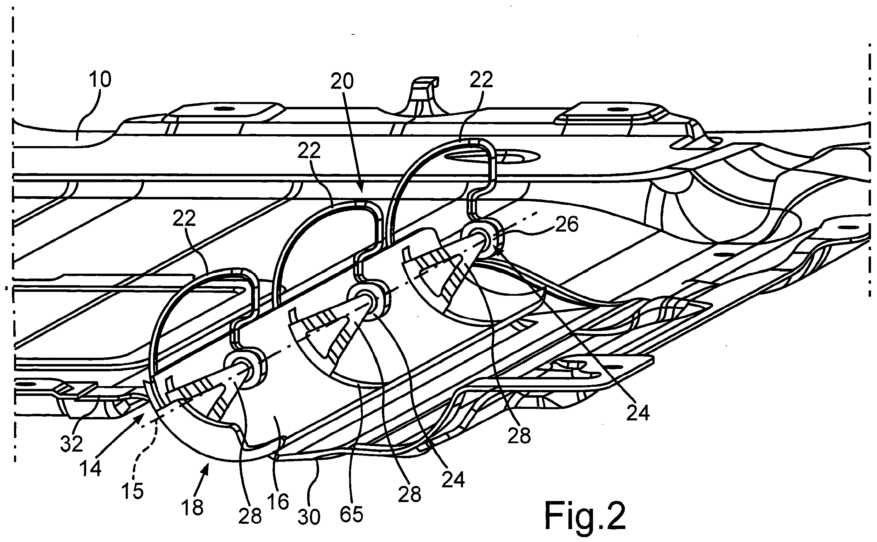

Während des Betriebs erwärmen sich die Verbrennungskraftmaschine und auch ein an diese angeschlossener Abgasanlagenabschnitt, wobei die Verbrennungskraftmaschine und der Abgasanlagenabschnitt beispielsweise bei Volllast eine wesentlich höhere Temperatur als in davon unterschiedlichen Betriebszuständen aufweisen. Mit zunehmender Temperatur der Verbrennungskraftmaschine und des ebenfalls im Motorraum angeordneten Abgasanlagenabschnitts steigt somit auch die Temperatur im Motorraum. Um dabei eine Überhitzung und daraus resultierende, thermische Schäden zu vermeiden, weist das Unterbodenverkleidungsteil 10 - wie besonders gut in Zusammenschau mit Fig. 2 erkennbar ist - wenigstens eine als Durchgangsöffnung ausgebildete Öffnung 14 auf. Wie im Folgenden noch genauer erläutert wird, ist die Öffnung 14 von im Motorraum aufgenommener beziehungsweise üblicherweise über mindestens eine Lufteinlassöffnung im Bereich der Kraftwagenfront dem Motorraum zugeführter Luft durchströmbar, so dass die Luft aus dem Motorraum über die Öffnung 14 an die Umgebung abströmen kann. Dadurch wirkt die bei diesem Ausführungsbeispiel auch als Ausströmöffnung bezeichenbare Öffnung 14 als Abluft-/Luftauslassöffnung, über welche die Luft aus dem Motorraum an die Umgebung des Kraftwagens abgeführt werden kann. Dadurch kann verhindert werden, dass die Temperatur im Motorraum eine kritische Grenztemperatur überschreitet.

Dieses Abführen von Luft aus dem Motorraum ist jedoch nicht in allen Betriebszuständen der Verbrennungskraftmaschine erforderlich, sondern beispielsweise bei Volllastbetrieb der Verbrennungskraftmaschine und/oder bei Teillastbetrieb der Verbrennungskraftmaschine und gegebenenfalls entsprechend hohen Außentemperaturen bei gegebenenfalls gleichzeitig reduzierter Kühlluftzufuhr zum Motorraum, so dass es - wenn die Öffnung 14 permanent offen wäre - in Betriebszuständen, in denen die Öffnung 14 unter Überhitzungsschutzgründen nicht geöffnet sein müsste, zu einer unnötigen und nicht gewünschten Verschlechterung der Aerodynamik des Kraftwagens kommen würde. Mit anderen Worten verursacht die im Unterbodenverkleidungsteil 10 in einem der darunter befindlichen Fahrbahn unmittelbar gegenüberliegend vorgesehene Öffnung 14 im geöffneten Zustand Störungen, insbesondere Verwirbelungen in der zwischen dem Unterbodenbereich des Kraftwagens und der Fahrbahn auftretenden Luftströmung, welche den Luftwiderstand erhöhen.

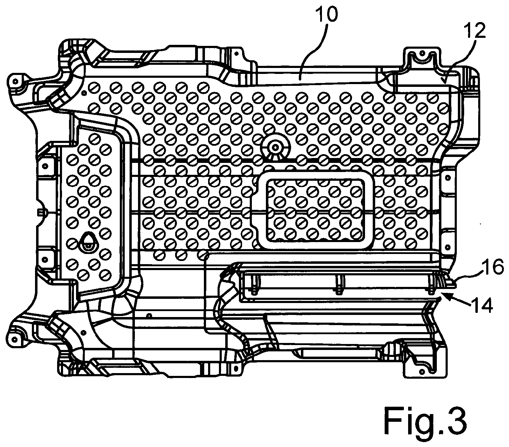

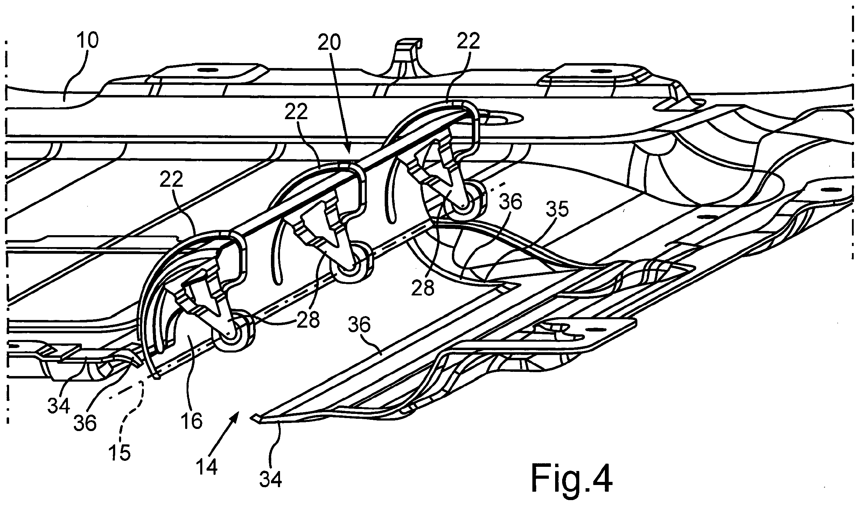

Um diese Beeinträchtigungen der Aerodynamik zu vermeiden und trotzdem thermische Schäden verhindern zu können, umfasst die Unterbodenverkleidung ein der Öffnung 14 zugeordnetes Verschlusselement 16, welches beispielsweise aus einem Kunststoffmaterial gebildet ist. Das Verschlusselement 16 ist zwischen einer zumindest einen Teilbereich der Öffnung 14 verschließenden und in Fig. 1 und 2 gezeigten Sperrstellung und wenigstens einer den Teilbereich freigebenden und in Fig. 3 und 4 gezeigten Offenstellung relativ zu dem Unterbodenverkleidungsteil 10 um eine Schwenkachse 15 verschwenkbar.

Aus Fig. 1 und 2 geht hervor, dass die Öffnung 14 in der Sperrstellung zumindest überwiegend und vorzugsweise vollständig durch das Verschlusselement 16 verschlossen und somit fluidisch versperrt ist. In der Sperrstellung kann somit Luft aus dem Motorraum nicht durch die Öffnung 14 hindurch strömen. Das Verschlusselement 16 wird beispielsweise dann und nur dann geöffnet, wenn die im Motorraum herrschende Temperatur einen vorgebbaren Schwellenwert überschreitet. Dadurch kann ein übermäßiger Temperaturanstieg im Motorraum vermieden werden. Liegt die Temperatur im Motorraum jedoch unterhalb des Schwellenwerts, so bleibt das Verschlusselement 16 verschlossen, so dass die Unterbodenverkleidung besonders vorteilhaft von Luft umströmbar ist. Somit weist der Kraftwagen insgesamt eine besonders vorteilhafte Aerodynamik auf. Darüber hinaus können dadurch, dass die Öffnung 14 verschlossen ist, übermäßige Luftverwirbelungen an der Unterbodenverkleidung vermieden werden, wodurch die Entstehung von unangenehmen Geräuschen verhindert wird. Somit weist der Personenkraftwagen ein besonders vorteilhaftes Geräuschverhalten auf. Durch die Möglichkeit, das Verschlusselement 16 zu öffnen und zu schließen, kann die Öffnung 14 bedarfsgerecht und beispielsweise in Abhängigkeit von der im Motorraum herrschenden Temperatur freigegeben und versperrt werden bei gleichzeitiger Realisierung einer besonders vorteilhaften Aerodynamik des Kraftwagens.

Die Konstruktion der Unterbodenverkleidung ist dabei auf Nachgiebigkeit ausgelegt, so dass sie beispielsweise auch Stöße von unten schadfrei standhalten kann. Zu diesen Stößen kommt es beispielsweise dann, wenn der Kraftwagen auf den Boden aufsetzt oder wenn Gegenstände wie beispielsweise Steine von unten gegen die Unterbodenverkleidung prallen. Ferner ist die Konstruktion der Unterbodenverkleidung bezüglich des Verhaltens bei Verschmutzung und für Schmutzanbringung optimiert, so dass die Funktion der Unterbodenverkleidung, insbesondere die Verstellfunktion des Verschlusselements 16, auch bei Verschmutzung gewährleistet bleibt.

Die Öffnung 14 ist somit eine regelbare, drehbare und wiederverschließbare Luftauslassöffnung, welche bei temperaturkritischen Betriebszuständen teilweise oder vollständig geöffnet ist. In temperaturunkritischen Betriebszuständen kann das Verschlusselement 16 geschlossen bleiben.

Aus Fig. 2 und 4 ist besonders gut erkennbar, dass das Verschlusselement 16 wenigstens einen zumindest in der Sperrstellung in Richtung des Unterbodenverkleidungsteils 10 konvex geformten Bereich 18 aufweist, mittels welchem die Öffnung 14 in der Sperrstellung verschlossen ist. Hierdurch kann das Verschlusselement 16 insbesondere in der Sperrstellung auf seiner der Umgebung zugewandten Außenseite besonders vorteilhaft von Luft umströmt werden, so dass die Unterbodenverkleidung an sich einen nur geringen Luftwiderstand aufweist. Der Bereich 18 ist von einer relativ dünnen, geschlossen Wand gebildet.

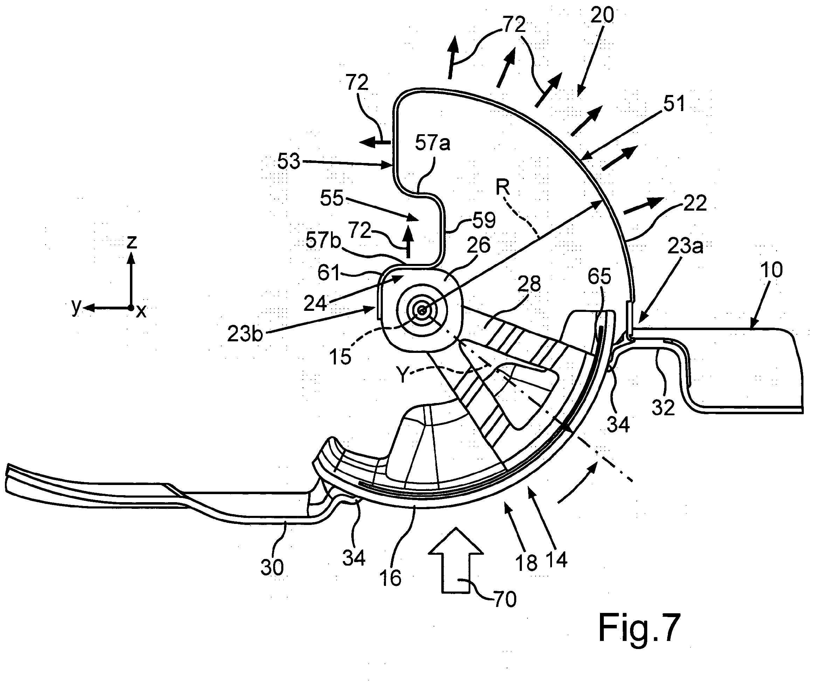

Das Verschlusselement 16 ist insgesamt rinnenförmig ausgebildet und weist eine Längserstreckung auf, die in etwa der Länge der hier rechteckförmigen Öffnung 14 entspricht oder ein gewisses Maß größer ist. Das Verschlusselement 16 ist aus Gewichtsgründen relativ dünnwandig und ist vorzugsweise Kunststoffmaterial hergestellt. Die gekrümmte Wandung des Verschlusselements 16 weist einen Radius r auf (Fig. 7), der auch dem Abstand der gekrümmten Wand zur Schwenkachse 15 entspricht.

An dem Unterbodenverkleidungsteil 10 ist eine in zumindest teilweiser Überdeckung mit der Öffnung 14 angeordnete Halteeinrichtung 20 festgelegt, an welcher das Verschlusselement 16 um die Schwenkachse 15 verschwenkbar gehalten ist. Die Halteeinrichtung 20 umfasst dabei eine Mehrzahl von entlang der Schwenkachse 15 voneinander beabstandeten Haltearme 22 auf, an welchen das Verschlusselement 16 jeweils schwenkbar gehalten ist. Die Anordnung der Haltearme 22 ist hier so gewählt, dass jeweils ein Haltearm 22 nahe des stirnseitigen Endes des Verschlusselements 16 und ein Haltearm 22 in etwa in der der Mitte des Verschlusselements angeordnet ist. Die Haltearme 22 sind bei dem in den Figuren dargestellten Ausführungsbeispiel der Unterbodenverkleidung identisch ausgebildet, so dass im Folgenden lediglich ein Haltearm 22 näher erläutert wird.

Der Haltearm 22 ist aus einem relativ schmalen Streifenmaterial hergestellt, beispielsweise einem Kunststoffmaterial oder einem Blech, und weist eine im Wesentlichen U-förmige Querschnittsform auf. Wichtig ist vor allem, dass der Haltearm 22 elastische, vorzugsweise federelastische Eigenschaften aufweist. Der Haltearm 22 ist hier beispielhaft einstückig ausgebildet.

Wie insbesondere in Fig. 7 erkennbar, ist der jeweilige Haltearm 22 mit einem ersten Endbereich 23a nahe des Rands der Öffnung 14 am Unterbodenverkleidungsteil 10 befestigt, beispielsweise kraft-, form- und/oder stoffschlüssig. Bevorzugt ist der Haltearm 22 zerstörungsfrei lösbar am Unterbodenverkleidungsteil 10 angebracht, beispielsweise mittels einer Klips- oder Rastverbindung und/oder mittels Schraubelementen.

Bei diesem Ausführungsbeispiel erstreckt sich der Haltearm 22 ausgehend von seinem am Unterbodenverkleidungsteil 10 fixierten Endbereich 23a zumindest im Wesentlichen bogenförmig in Fahrzeughochrichtung (z-Richtung) nach oben von dem Unterbodenverkleidungsteil 10 weg. Der sich hierzu an den Endbereich 23a anschließende beziehungsweise diesen aufweisende Wandabschnitt 51 des Haltearms 22 weist eine Krümmung mit dem Radius R auf, der im montierten Zustand des Haltearms am Unterbodenverkleidungsteil gleichzeitig auch dem Abstand zwischen der Schwenkachse 15 des Verschlusselements 16 und dem Wandabschnitt 51 entspricht. Der Wandabschnitt 51 erstreckt sich über einen Winkelbereich von in etwa 90°.

An den hier kreisbogenförmig, insbesondere viertelkreisförmig, gekrümmten Wandabschnitt 51 schließt sich ein in Fahrzeughochrichtung nach unten in Richtung auf die Öffnung 14 zu verlaufender, hier gerader Wandabschnitt 53 an, an den sich ein wiederum lokaler Verformungsbereich 55 in Form eines vom Wandabschnitt 53 seitlich abgestellten U-förmigen Abschnitts anschließt, wobei die offene Seite des Verformungsbereichs 55 bei diesem Ausführungsbeispiel in Fahrzeugquerrichtung (y-Richtung) gerichtet ist. Der lokale Verformungsbereich 55 des Haltearms 22 weist horizontale Wandabschnitte 57a und 57b auf, die über einen vertikalen Wandabschnitt 59, welcher parallel zum Wandabschnitt 53 verläuft, miteinander verbunden sind.

An den lokalen Verformungsbereich 55 schließt sich ein Aufnahmebereich 24 an, der gleichzeitig den zweiten Endbereich 23b bildet. In dem mittels des Wandabschnitts 57b und eines sich daran anschließenden, senkrecht nach unten in Richtung auf die Öffnung 14 verlaufenden Wandabschnitts 61 gebildeten Aufnahmebereich 24 ist ein Lagerelement 26 eines Schwenklagers 27 zumindest teilweise aufgenommen beziehungsweise daran befestigt. Das am jeweiligen Haltearm 22 befestigte Lagerelement 26 dient zum schwenkbaren Lagern des Verschlusselements 16. Hierzu ist ein jeweiliger Schwenkarm 28 einenends im Lagerelement 26 um die Schwenkachse 15 schwenkbar gelagert und anderenends auf der dem mittels dem Unterbodenverkleidungsteil 10 abzudeckenden Bereich zugewandten Seite des Verschlusselements 16 an diesem befestigt. Zur flächigen Abstützung und Formstabilisierung des Verschlusselements 16 ist zwischen dem jeweiligen Schwenkarm 28 und dem Verschlusselement 16 noch ein sich an die gekrümmte Innenwand des Verschlusselements 16 flächig anliegendes Verstärkungselement 65 vorgesehen.

Die Anordnung und Ausgestaltung des jeweiligen Haltearms 22 ist so gewählt, dass die Schwenkachse 15 des Verschlusselements 16 oberhalb der Öffnung 14 quasi frei im Raum positioniert ist.

In der Sperrstellung liegt das Verschlusselement 16 mit seiner Außenumfangsfläche im Randbereich der Öffnung 14 an dieser an (Figur 7), wodurch die Öffnung 14 zumindest im Wesentlichen vollständig abgedichtet wird. Vorzugsweise wird das Verschlusselement 16 in seiner Sperrstellung mittels der Haltearme 22 mit einer auf die Öffnung 14 gerichteten Vorspannkraft beaufschlagt, um einen dichtenden, im Fahrbetrieb des Kraftwagens klapperfreien Anlagekontakts herzustellen. Alternativ hierzu oder als zusätzliche Maßnahme wirkt die von innen auf das rinnenförmige Verschlusselement 16 wirkende Luftmasse der über die Fahrzeugfront einströmenden Luft, welche sich in dem gegenüber dem Motorraum konkav ausgebildeten Verschlusselement 16 wie in einem Segel fängt.

Bei dem in Fig. 7 dargestellten Ausführungsbeispiel liegt das Verschlusselement 16 unmittelbar an den Längsrändern 34 und dem nicht erkennbaren vorderen Querrand der Öffnung 14 an. Als Alternative hierzu kann auch vorgesehen sein, dass die Längsränder 34 und der vordere Querrand 35 der Öffnung 14 mit flexiblen Dichtelementen 36, insbesondere Dichtleisten, versehen sind, welche in Sperrstellung des Verschlusselements 16 in dichtendem Anlagekontakt mit diesem stehen, wie bei dem in Figur 4 darstellten Ausführungsbeispiel ersichtlich.

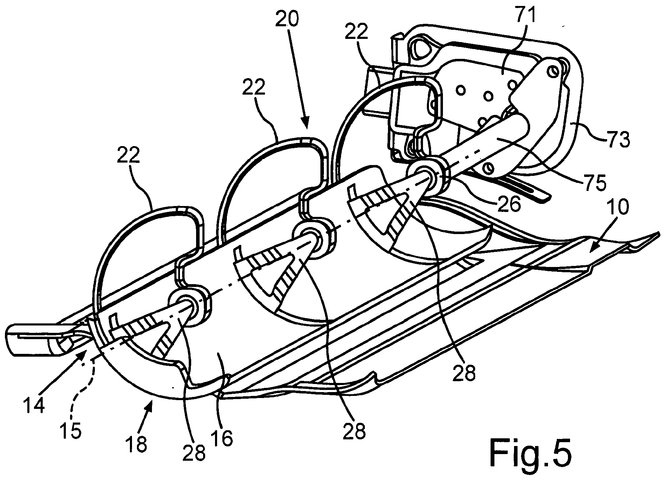

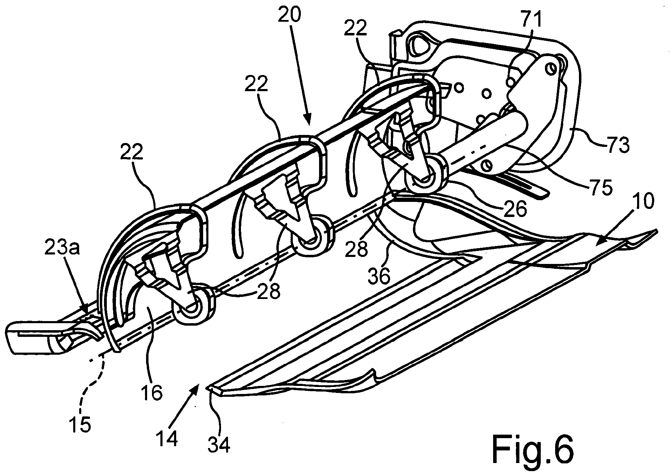

Zum Verschwenken des Verschlusselements 16 ist vorzugsweise ein in den Fig. 5 und 6 dargestellter Motor 71, insbesondere Elektromotor und Adaptierung mit einem Stellelement, beispielsweise Seilzug, Welle oder dergleichen vorgesehen, welcher mittels einer Befestigungskonsole 73 am Unterbodenverkleidungsteil 10 befestigbar ist. Der Motor 71 ist mittels einer schematisch dargestellten biegsamen Welle 75 mit einem der Schwenkarme 28 drehfest gekoppelt. Die Welle 75 ist zumindest in etwa koaxial zur Schwenkachse 15 des Verschlusselements 15 angeordnet.

Der Motor 71 wird beispielsweise in Abhängigkeit von der im Motorraum herrschenden Temperatur angesteuert, wobei die Temperatur mittels wenigstens eines Temperatursensors erfasst wird. Dadurch kann der Motor in Abhängigkeit von der Temperatur geregelt werden, so dass das Verschlusselement 16 mittels des Motors 71 in Abhängigkeit von der Temperatur verschwenkt werden kann.

Zur Funktionsweise des Verschlusselements 16 und deren Halteeinrichtung 20: Erhält das in Sperrstellung angeordnete Verschlusselement 16 von unten eine Krafteinwirkung oder einen Stoß, wie in Figur 7 mit einem Pfeil 70 angedeutet, so geht aufgrund der seitlichen Anordnung der Haltearme 22 beziehungsweise deren flexiblen Ausgestaltung das Verschlusselement 16 automatisch auf, indem es vom Randbereich der Öffnung 14 abhebt, bevor es beschädigt wird. Dies wird dadurch realisiert, indem der jeweilige Haltearm 22 sich verformen, vorzugsweise federelastisch verformen und somit gemeinsam mit dem Verschlusselement 16 eine Ausweichbewegung in verschiedenen Richtungen der verschiedenen Wandabschnitte 51, 53, 57a, 57b, 59 vollziehen kann. Diese verschiedenen Freiheitsgrade der Haltearme 22 werden sowohl aufgrund ihres Materials als auch aufgrund ihrer Form erreicht. Die elastische Welle 75 verformt sich hierbei entsprechend mit und ermöglich so erst die Nachgiebigkeit der Haltearm 22. Fällt die Krafteinwirkung 70 auf das Verschlusselement 16 wieder weg, federn die Haltearme 22 in ihre Ausgangsform zurück und drängen dadurch das Verschlusselement 16 wieder in seine Sperrstellung und damit gegen den Rand der Öffnung 14. Zur Verlagerung des Verschlusselements 16 aus seiner Sperrstellung gemäß der Figuren 1, 2, 5 und 7 in seine Offenstellung gemäß den Figuren 3, 4 und 6 wird das Verschlusselement 16 um die Schwenkachse 15 verschwenkt. Dabei fährt das Verschlusselement 16 in den zwischen den Wandabschnitten 51, 53, 57a, 59 begrenzten Freiraum des jeweiligen Haltearms 22 ein. Festzuhalten bleibt noch, dass das Verschlusselement 16 auch in seiner Offenstellung noch einen Längsrand 34, nämlich den den randseitigen Befestigungsbereich des Verschlusselements 16 am Unterbodenverkleidungsteil 10 benachbarten Längsrand 34 überdeckt. Damit wird sichergestellt, dass das Verschlusselement 16 bei einer Rückverlagerung in seine Sperrstellung wieder frei in die Öffnung 14 quasi eintauchen kann und dabei randseitig nicht anstößt.

Aus Fig. 4 ist besonders gut erkennbar, dass ein die Öffnung 14 in Fahrzeugquerrichtung (y-Richtung) begrenzender Wandungsbereich 30 des Unterbodenverkleidungsteils 10 in Fahrzeughochrichtung tiefer als ein gegenüberliegender Wandungsbereich 32 angeordnet ist, durch welchen die Öffnung 14 seitlich begrenzt ist. Die gekrümmte Wandung des Verschlusselements, insbesondere dessen Rinnenform, ermöglicht ohne weiteres die Überbrückung des Höhenniveauunterschieds zwischen den Wandungsbereichen 30, 32 zur dichtenden Absperrung der Öffnung 14 bei in Sperrstellung angeordnetem Verschlusselement 16.

Bei dem in den Figuren dargestellten Ausführungsbeispiel der Unterbodenverkleidung erstreckt sich im montierten Zustand der Unterbodenverkleidung die Schwenkachse 15 des Verschlusselements 16 zumindest im Wesentlichen in Fahrzeuglängsrichtung (x-Richtung), so dass eine besonders große, sich in Fahrzeuglängsrichtung erstreckende Länge der Öffnung 14 und insbesondere des Verschlusselements 16 geschaffen werden kann. Dadurch kann eine besonders große Menge an Luft aus dem Motorraum an die Umgebung des Kraftwagens über die Öffnung 14 abgeführt werden. Die längliche Ausgestaltung der Öffnung 14 ermöglicht es weiterhin, dass bei in Offenstellung angeordnetem Verschlusselement 16 in den mittels des Unterbodenverkleidungsteils abgedeckten, darüber angeordneten Bereich eingetragene Partikel wieder ausgetragen werden können und sich nicht in dem darüberliegenden Raum verfangen. Der Austrag dieser Partikel aus der Öffnung 14 heraus wird weiter dadurch begünstigt, dass die Öffnung 14 an ihrem hinteren Ende zum hinteren äußeren Querrand des Unterbodenverkleidungsteils 10 randoffen ausbildet ist.

In bevorzugter Ausführungsform eines mit der erfindungsgemäßen Unterbodenverkleidung versehenen Kraftwagens ist der Raum oberhalb des hinteren Querrands der Unterbodenverkleidung auf Höhe der Öffnung 14 ebenfalls offen ausgebildet, was ein Ansammeln von eingetragenen Partikeln verhindert und den Austrag der Partikel aus dem Kraftwagen begünstigt. Der Austrag der Partikel wird auch von dem durch die Öffnung 14 an die Umgebung ausströmenden Luftstrom unterstützt.

## Patentansprüche

1. Unterbodenverkleidung für einen Kraftwagen, mit wenigstens einem unterhalb eines Bereichs des Kraftwagens anordenbaren Unterbodenverkleidungsteil (10), welches wenigstens eine Öffnung (14) aufweist, und mit wenigstens einem Verschlusselement (16), welches um eine Schwenkachse (15) zwischen einer zumindest einen Teilbereich der Öffnung (14) verschließenden Sperrstellung und wenigstens einer den Teilbereich freigebenden Offenstellung relativ zu dem Unterbodenverkleidungsteil (10) verschwenkbar ist,
**dadurch gekennzeichnet,**
**dass** das Verschlusselement (16) mittels einer Halteeinrichtung (20) so am Unterbodenverkleidungsteil (14) gehalten ist, dass die Schwenkachse (15) des Verschlusselements (16) in Fahrzeughochrichtung oberhalb der Öffnung (14) und in einem Abstand zu dieser positioniert ist, dass die Halteeinrichtung (20) mindestens einen Haltearm (22) aufweist, an welchem das Verschlusselement (16) verschwenkbar gehalten ist, und dass der mindestens eine Haltearm (22) federelastisch ausgebildet ist und/oder zumindest einen federelastisch verformbaren Abschnitt aufweist.

2. Unterbodenverkleidung nach Anspruch 1,
**dadurch gekennzeichnet, dass**
der mindestens eine Haltearm (22) an einem Endbereich (23a) am Unterbodenverkleidungsteil (10) befestigt ist und an seinem anderen, mindestens ein Schwenklager (27) für das Verschlusselement (16) aufweisenden Endbereich (23b) frei über die Öffnung (14) hin auskragt.

3. Unterbodenverkleidung nach einem der vorhergehenden Ansprüche,
**dadurch gekennzeichnet, dass**
die Halteeinrichtung (20) mehrere entlang der Schwenkachse (15) voneinander beabstandete Haltearme (22) aufweist, an welchen das Verschlusselement (16) jeweils verschwenkbar gelagert ist.

4. Unterbodenverkleidung nach einem der vorhergehenden Ansprüche,
**dadurch gekennzeichnet,**
**dass** das Verschlusselement (16) wenigstens einen gekrümmten Wandabschnitt aufweist, der in Sperrstellung angeordnetem Verschlusselement die Öffnung (14) verschließt.

5. Unterbodenverkleidung nach einem der vorhergehenden Ansprüche,
**dadurch gekennzeichnet,**
**dass** der Abstand der Schwenkachse (15) zu mindestens einem Abschnitt des Randes (34,35) der Öffnung (14) zumindest im Wesentlichen dem Krümmungsradius (r) des konvex geformten Bereichs des Verschlusselements (16) entspricht.

6. Unterbodenverkleidung nach einem der vorhergehenden Ansprüche,
**dadurch gekennzeichnet,**
**dass** das auf der dem abzudeckenden Bereich des Kraftwagens zugewandten Seite des Unterbodenverkleidungsteil (10) angeordnete Verschlusselement (16) in Sperrstellung mit seiner im verbauten Zustand der Unterbodenverkleidung der Fahrbahn zugewandten Außenfläche zumindest teilweise in Anlagekontakt mit wenigstens einem Randbereich der Öffnung (14) steht oder mittels eines auf die Innenfläche des Verschlusselements (16) wirkenden Luftstroms bringbar ist.

7. Unterbodenverkleidung nach einem der vorhergehenden Ansprüche,
**dadurch gekennzeichnet, dass**
die Öffnung (14) rechteckförmig ausgebildet und deren Längsmittelachse parallel zur Schwenkachse (15) des Verschlusselements (16) angeordnet ist.

8. Unterbodenverkleidung nach einem der vorhergehenden Ansprüche,
**dadurch gekennzeichnet,**
**dass** die Längsmittelachse der Öffnung (14) und die Schwenkachse (15) des Verschlusselements (16) in einer sich in Kraftwagenhochrichtung (z-Richtung) und Kraftwagenlängsrichtung (x-Richtung) aufspannenden Ebene angeordnet sind.

9. Unterbodenverkleidung nach einem der vorhergehenden Ansprüche,
**dadurch gekennzeichnet,**
**dass** die Öffnung (14) sich bis zu einem -in verbautem Zustand des Unterbodenverkleidungsteils (10) und bei Vorwärtsfahrtrichtung des Kraftwagens betrachtet- hinteren Querrand des Unterbodenverkleidungsteils (10) erstreckt.

10. Unterbodenverkleidung nach Anspruch 9,
**dadurch gekennzeichnet, dass**
die Öffnung (14) den hinteren Querrand des Unterbodenverkleidungsteils (10) unterbricht und zu diesem zumindest teilweise randoffen ausbildet ist.

11. Kraftwagen mit einer Unterbodenverkleidung nach einem der vorhergehenden Ansprüche 1 bis 10,
**dadurch gekennzeichnet,**
**dass** im hinteren Querrandbereich des Unterbodenverkleidungsteils (10) -mit Blickrichtung in Kraftwagenlängsrichtung- oberhalb der Öffnung (14) ein zur Kraftwagenaußenseite hin offener Freiraum zwischen dem Unterbodenverkleidungsteil und dem darüber befindlichen Unterbodenbereich vorgesehen ist.

## Claims

1. Underbody panelling for a motor vehicle, with at least one underbody panelling part (10), which can be arranged below a region of the motor vehicle and which has at least one opening (14), and with at least one closing element (16), which can be pivoted about a pivot axis (15) relative to the underbody panelling part (10) between a locking position closing at least a sub-region of the opening (14) and an open position uncovering the sub-region,
**characterised in that**
the closing element (16) is held on the underbody panelling part (10) by means of a holding device (20) in such a way that the pivot axis (15) of the closing element (16) is positioned above the opening (14) in the vertical direction of the vehicle and at a distance therefrom, **in that** the holding device (20) has at least one holding arm (22), at which the closing element (16) is pivotably held, and **in that** the at least one holding arm (22) is designed to be spring-elastic and/or at least has a spring-elastically deformable section.

2. Underbody panelling according to claim 1,
**characterised in that**
the at least one holding arm (22) is secured to the underbody panelling part (10) in an end region (23a), and **in that** its other end region, which has at least one pivot bearing (27) for the closing element (16), projects freely beyond the opening (14).

3. Underbody panelling according to any of the preceding claims,
**characterised in that**
the holding device (20) has several holding arms (22), which are spaced along the pivot axis (15) and on which each closing element (16) is pivotably held.

4. Underbody panelling according to any of the preceding claims,
**characterised in that**
the closing element (16) has at least one curved wall section which closes the opening (14) if the closing element is in the locking position.

5. Underbody panelling according to any of the preceding claims,
**characterised in that**
the distance of the pivot axis (15) from at least one section of the edge (34, 35) of the opening (14) corresponds at least substantially to the radius of curvature (r) of the convex-shaped region of the closing element (16).

6. Underbody panelling according to any of the preceding claims,
**characterised in that**
the closing element (16) located on the side of the underbody panelling part (10) facing the region of the motor vehicle to be covered is in the locking position with its outer surface which faces the road in the assembled state of the underbody panelling at least partially in contact with at least one edge region of the opening (14) or can be brought into contact by means of an airflow acting on the inner surface of the closing element (16).

7. Underbody panelling according to any of the preceding claims,
**characterised in that**
the opening (14) is rectangular and its longitudinal central axis is arranged to be parallel to the pivot axis (15) of the closing element (16).

8. Underbody panelling according to any of the preceding claims,
**characterised in that**
the longitudinal central axis of the opening (14) and the pivot axis (16) of the closing element (16) are arranged in a plane spanning the vertical direction (z-direction) of the motor vehicle and the longitudinal direction (x-direction) of the motor vehicle.

9. Underbody panelling according to any of the preceding claims,
**characterised in that**
the opening (14) extends - as viewed in the assembled state of the underbody panelling part (10) and in the forward travelling direction of the motor vehicle - to a rear transverse edge of the underbody panelling part (10).

10. Underbody panelling according to claim 9,
**characterised in that**
the opening (4) interrupts the rear transverse edge of the underbody panelling part (10) and is at least partially open thereto at the edge.

11. Motor vehicle with an underbody panelling according to any of the preceding claims 1 to 10,
**characterised in that**
in the rear transverse edge region of the underbody panelling part (10), there is - as viewed in the longitudinal direction of the motor vehicle - provided above the opening (14) a free space open to the outside of the motor vehicle between the underbody panelling part and the underbody panelling region located above.

## Revendications

1. Habillage de dessous de caisse pour un véhicule automobile, comprenant au moins une partie d'habillage de dessous de caisse (10) pouvant être disposée sous une zone du véhicule automobile, qui présente au moins une ouverture (14), et comprenant au moins un élément de fermeture (16) qui peut pivoter entre une position de blocage fermant au moins une zone partielle de l'ouverture (14) et au moins une position ouverte libérant la zone partielle, par rapport à la partie d'habillage de dessous de caisse (10), **caractérisé en ce que** l'élément de fermeture (16) est retenu au moyen d'un dispositif de retenue (20) de manière à ce que l'axe de pivotement (15) de l'élément de fermeture (14) se positionne dans le sens ascendant du véhicule au-dessus de l'ouverture (14) et à une certaine distance de cette dernière, **en ce que** le dispositif de retenue (20) présente au moins un bras de retenue (22) sur lequel est retenu en pivotement l'élément de fermeture (16) et **en ce que** l'au moins un bras de retenue (22) est élastique et/ou présente au moins une section pouvant se déformer élastiquement.

2. Habillage de dessous de caisse selon la revendication 1, **caractérisé en ce que** l'au moins un bras de retenue (22) est fixé au niveau d'une zone marginale (23a) à la partie d'habillage de dessous de caisse et fait saillie librement de l'ouverture (14) sur son autre zone marginale (23b) présentant au moins un palier d'articulation (27) pour l'élément de fermeture (16).

3. Habillage de dessous de caisse selon l'une quelconque des revendications précédentes, **caractérisé en ce que** le dispositif de retenue (20) présente plusieurs bras de retenue (22) espacés les uns des autres le long de l'axe de pivotement (15) sur lesquels est monté pivotant chaque élément de fermeture (16).

4. Habillage de dessous de caisse selon l'une quelconque des revendications précédentes, **caractérisé en ce que** l'élément de fermeture (16) présente au moins une section de paroi courbée qui ferme l'ouverture (14) lorsque l'élément de fermeture se trouve dans la position de blocage.

5. Habillage de dessous de caisse selon l'une quelconque des revendications précédentes, **caractérisé en ce que** la distance entre l'axe de pivotement (15) et au moins une section du bord (34, 35) de l'ouverture (14) correspond sensiblement au rayon de courbure (r) de la zone convexe de l'élément de fermeture (16).

6. Habillage de dessous de caisse selon l'une quelconque des revendications précédentes, **caractérisé en ce que** l'élément de fermeture (16) disposé sur la face de la partie d'habillage de dessous de caisse (10) orientée vers la zone à recouvrir du véhicule automobile se trouve dans la position de blocage, sa face extérieure orientée vers la voie de circulation lorsque l'habillage de dessous de caisse est monté, au moins à certains endroits en contact d'appui avec au moins une zone de bord de l'ouverture (14) ou peut être amené en contact d'appui au moyen d'un flux d'air agissant sur la face intérieure de l'élément de fermeture (16).

7. Habillage de dessous de caisse selon l'une quelconque des revendications précédentes, **caractérisé en ce que** l'ouverture (14) est rectangulaire et son axe longitudinal est parallèle à l'axe de pivotement (15) de l'élément de fermeture (16).

8. Habillage de dessous de caisse selon l'une quelconque des revendications précédentes, **caractérisé en ce que** l'axe longitudinal de l'ouverture (14) et l'axe de pivotement (15) de l'élément de fermeture (16) sont disposés dans un plan partant dans le sens ascendant du véhicule (sens z) et dans le sens longitudinal du véhicule (sens x).

9. Habillage de dessous de caisse selon l'une quelconque des revendications précédentes, **caractérisé en ce que** l'ouverture (14) s'étend jusqu'à un bord arrière oblique de la partie d'habillage de dessous de caisse (10) lorsque la partie d'habillage de dessous de caisse (10) est montée et lorsqu'on l'observe dans le sens de la marche avant du véhicule automobile.

10. Habillage de dessous de caisse selon la revendication 9, **caractérisé en ce que** l'ouverture (14) interrompt le bord arrière oblique de la partie d'habillage de dessous de caisse (10) et est conçu à certains endroits avec les bords ouverts par rapport à celle-ci.

11. Habillage de dessous de caisse selon l'une quelconque des revendications précédentes 1 à 10, **caractérisé en ce que** dans la zone marginale oblique de la partie d'habillage de dessous de caisse (10), lorsqu'on l'observe dans le sens longitudinal du véhicule automobile, au-dessus de l'ouverture (14) est ménagé un espace libre ouvert vers le côté extérieur du véhicule automobile entre la partie d'habillage de dessous de caisse et la zone de dessous de caisse se trouvant dessus.
